# EUROPÄISCHE PATENTSCHRIFT

(11) **EP 3 744 164 B1**
(45) Veröffentlichungstag und Bekanntmachung des Hinweises auf die Patenterteilung: **07.06.2023**
(21) Anmeldenummer: 19177104.7
(22) Anmeldetag: 28.05.2019
(51) Int. Cl.: A01D 34/14, A01D 34/18

(54) **SCHNEIDANORDNUNG FÜR EIN LAND- ODER FORSTWIRTSCHAFTLICHES SCHNEIDWERK**
CUTTING ASSEMBLY FOR AN AGRICULTURAL OR FORESTRY CUTTING DEVICE
DISPOSITIF DE COUPE POUR UN MÉCANISME DE COUPE AGRICOLE OU FORESTIER

(43) Veröffentlichungstag der Anmeldung: 02.12.2020
(73) Patentinhaber: SMF - Holding GmbH, 57612 Eichelhardt (DE)
(72) Erfinder: Otto, Sascha, 57612 Racksen (DE); Schmidt, Ralf, 57629 Mörsbach (DE)
(74) Vertreter: Neumann Müller Oberwalleney Patentanwälte PartG mbB

(56) Entgegenhaltungen:
- DE-A1- 3 229 743
- US-A- 195 907
- US-A- 1 945 301
- US-A1- 2002 005 035

## Beschreibung

Die Erfindung betrifft eine Schneidanordnung für ein land- oder forstwirtschaftliches Schneidwerk umfassend: ein Unterteil und ein Oberteil, die gemeinsam zumindest einen Finger bilden, der sich entlang einer Längsachse erstreckt, wobei zwischen dem Unterteil und dem Oberteil ein Klingenspalt ausgebildet ist, ein Messer, das in dem Klingenspalt in einer Antriebsrichtung quer zur Längsachse hin und her gehend geführt ist und das zumindest eine Schneide aufweist.

Schneidanordnungen sind beispielsweise bei Mähwerken bekannt, die in der Regel einen Fingerbalken aufweisen, an dem mehrere Finger angeordnet sind. Relativ zum Fingerbalken ist ein Messer oszillierend geführt, wobei das Messer eine Messerschiene umfasst, an der mehrere Messerklingen befestigt sind. Die Messerklingen bilden Schneiden, die mit Gegenschneiden, die durch die Mähfinger gebildet sind, zusammenarbeiten. Eine entsprechende Mähfingeranordnung ist in der Druckschrift EP 2 366 274 A2 beschrieben.

Die US 195907 A beschreibt ein Schneid- oder Mähwerk mit einem Mähfinger, in dem ein Klingenspalt ausgebildet ist, wobei ein Messer in dem Klingenspalt hin und her gehend geführt ist, das eine Schneide aufweist, die eine untere Schneidfase und eine obere Schneidfase aufweist.

Die DE 32 29 743 A1 zeigt ein Fingerbalkenmähwerk für Erntemaschinen mit hin- und hergehendem Mähmesser aus auf einem Messerbalken angeordneten Messerklingen, die mit den Mähfingern als Gegenschneiden zusammenwirken. Ein Unterteil und ein Oberteil bilden gemeinsam einen Mähfinger, wobei zwischen dem Unterteil und dem Oberteil ein Klingenspalt ausgebildet ist. Die Messerklingen weisen eine Schneide auf, die eine dem Oberteil zugewandte Schneidfase aufweist. Das Unterteil ist zweiteilig ausgeführt, wobei ein Führungsteil und ein Träger gemeinsam das Unterteil bilden und das Führungsteil abschnittsweise zwischen Träger und Oberteil angeordnet ist.

Die US 1 945 301 A bezieht sich auf einen Messerschutz von Mähern und Erntemaschinen. Der Schutzfinger weist einen oberen, sich nach hinten erstreckenden Schild auf, das dazu dient, die Messerklinge zu schützen und an jeder Seite eine obere Kante zu bilden, an der das Gras unter der Einwirkung der Messer anliegen kann. Der Schild ist mit Zacken an seinen Seitenkanten versehen, die Zähne bilden, die in das Gras oder ähnliches eingreifen, um sicherzustellen, dass das Gras oder ähnliches in der richtigen Position zum Scheren gehalten wird.

Die US 2002/005035 A1 betrifft einen Mähfinger für eine landwirtschaftliche Mähmaschine, wie sie allgemein bei Gras-, Getreide- und Gemüseschneidemaschinen verwendet wird, mit zwei gleichen und parallele nebeneinander liegenden Fingern, die durch zwei übereinander liegende gehärtete Stahlplatten gebildet sind, die in ihren hinteren und mittleren Abschnitten einen Abstand aufweisen. Die vorderen Bereiche sind verbunden und bilden scharfe Spitzen, die nach oben gebogen sind. In den mittleren Abschnitten ist ein Schneidspalt gebildet, um die schwingende Bewegung der Schneidmesser zu ermöglichen, deren Schneiden mit gezackten Seitenrändern wirken, um die Schnitte durch Scherung zu erzeugen.

Ein Nachteil der zum Mähen beziehungsweise zum Schneiden von Erntegut vorgesehenen Schneidanordnungen besteht darin, dass diese auf das Schneiden von Halmen beschränkt sind.

Eine Aufgabe der Erfindung besteht darin, eine Schneidanordnung anzugeben, welche das Schneiden von Pflanzenteilen mit höherer Stärke und/oder Härte erlaubt.

Die Aufgabe wird durch die Schneidanordnung gemäß Anspruch 1 gelöst. In den Unteransprüchen sind vorteilhafte Ausführungsformen und Weiterbildungen angegeben.

Die erfindungsgemäße Schneidanordnung für ein land- oder forstwirtschaftliches Schneidwerk umfasst ein Unterteil und ein Oberteil, die gemeinsam zumindest einen Finger bilden, der sich entlang einer Längsachse erstreckt, wobei zwischen dem Unterteil und dem Oberteil ein Klingenspalt ausgebildet ist, sowie ein Messer, das in dem Klingenspalt in einer Antriebsrichtung quer zur Längsachse hin und her gehend geführt ist und das zumindest eine Schneide aufweist. Erfindungsgemäß weist die Schneide eine dem Unterteil zugewandte untere Schneidfase und eine dem Oberteil zugewandte obere Schneidfase auf.

Im Unterschied zum Stand der Technik arbeitet die Schneide nicht mit einer Gegenschneide an dem Klingenspalt zusammen. Die Schneide vollführt also keinen Scherenschnitt im Zusammenspiel mit dem Finger. Der Finger dient hier statt dessen vorteilhaft als Gegenhalter und das Messer durchtrennt das Schnittgut in der Art eines Keilschnitts oder Axtschnitts mittels der Schneide mit der unteren Schneidfase und der oberen Schneidfase. Dadurch kann Schnittgut höherer Stärke und Festigkeit durchtrennt werden, beispielsweise Äste. Die untere Schneidfase und die obere Schneidfase stoßen vorzugsweise an einer Schneidkante aneinander und schließen bevorzugt einen spitzen Schneidenwinkel ein.

Die Bezeichnungen Unterteil und Oberteil beziehen sich nicht auf eine bestimmte Ausrichtung des Schneidwerks bezüglich eines Bodens oder einer Arbeitsmaschine, sondern definieren oben und unten nur bezüglich des Schneidwerks selbst. Die Längsachse des Fingers erstreckt sich in einem kartesischen Koordinatensystem mit drei Raumrichtungen X, Y und Z in der X-Richtung, während die Antriebsrichtung des Messers insbesondere in der Z-Richtung liegt. Das Unterteil und das Oberteil sind in der Y-Richtung beabstandet angeordnet. Die Bezeichnungen von Bauteilen als obere und untere Bauteile sind, im Sinne der Erfindung, in der Y-Richtung beabstandet angeordnet, wobei die oberen Bauteile dem Oberteil näher angeordnet sind als dem Unterteil und wobei die unteren Bauteile dem Unterteil näher angeordnet sind als dem Oberteil.

Bei der Verwendung des Schneidwerks ist vorgesehen, dass das Unterteil dem nach dem Schnitt an der Pflanze verbleibenden Teil des Schneidguts zugewandt ist. Der abzuschneidende Teil des Schneidguts befindet sich beim Schnitt auf der Seite des Oberteils.

Gemäß einer bevorzugten Ausführungsform ist vorgesehen, dass das Messer eine dem Unterteil zugewandte untere Anlagefläche aufweist, zu der die untere Schneidfase winklig verlaufend angeordnet ist und dass das Messer eine dem Oberteil zugewandte obere Anlagefläche aufweist, zu der die obere Schneidfase winklig verlaufend angeordnet ist. Die untere Anlagefläche und die obere Anlagefläche sind vorzugsweise parallel zueinander angeordnet. Die Schneidkante ist weiterhin bevorzugt in einer Dickenrichtung des Messers zwischen der unteren Anlagefläche und der oberen Anlagefläche angeordnet.

Erfindungsgemäß ist vorgesehen, dass das Unterteil zweiteilig ausgeführt ist, wobei ein Führungsteil und ein Träger gemeinsam das Unterteil bilden und wobei das Führungsteil zumindest abschnittsweise zwischen dem Träger und dem Oberteil angeordnet ist. Das Führungsteil weist insbesondere eine untere Führungsfläche auf, die den Messerspalt begrenzt und das Oberteil weist eine obere Führungsfläche auf, die ebenfalls den Messerspalt begrenzt, wobei die untere Führungsfläche und die obere Führungsfläche parallel zueinander angeordnet sind.

Weiterhin erfindungsgemäß ist vorgesehen, dass das Führungsteil zumindest eine untere Gegenkante und das Oberteil zumindest eine obere Gegenkante aufweist, an denen die Schneide bei der Hin- und Herbewegung des Messers vorbeigeführt wird, wobei die obere Gegenkante gezahnt und die untere Gegenkante geradlinig ausgebildet ist. Bevorzugt weist das Führungsteil beidseitig der Längsachse untere Gegenkanten und das Oberteil beidseitig der Längsachse obere Gegenkanten aufweist.

Gemäß einer weiteren bevorzugten Ausführungsform ist vorgesehen, dass das Unterteil und das Oberteil zwei oder mehr Finger bilden, wobei die Finger parallel zueinander angeordnet und über mindestens einen Steg am Unterteil und/oder am Oberteil miteinander verbunden sind.

Nachfolgend wird die Erfindung anhand eines Ausführungsbeispiels mit Bezug auf die beiliegenden Zeichnungen näher erläutert. Die Ausführungen sind beispielhaft und schränken den allgemeinen Erfindungsgedanken nicht ein.

Es zeigen
Figur 1 ein Ausführungsbeispiel einer erfindungsgemäßen Schneidanordnung in einer Seitenansicht;
Figur 2 das Ausführungsbeispiel gemäß Figur 1 in einer perspektivischen Ansicht;
Figur 3 das Ausführungsbeispiel gemäß Figur 1 in einer weiteren perspektivischen Ansicht;
Figur 4 das Ausführungsbeispiel gemäß Figur 1 in einer weiteren perspektivischen Ansicht;
Figur 5 zwei Finger des Ausführungsbeispiels gemäß Figur 1 in einer Seitenansicht;
Figur 6 die zwei Finger gemäß Figur 5 in einer perspektivischen Ansicht;
Figur 7 die zwei Finger gemäß Figur 5 in einer weiteren perspektivischen Ansicht;
Figur 8 ein Messer des Ausführungsbeispiels gemäß Figur 1 in einer perspektivischen Ansicht;
Figur 9 das Messer gemäß Figur 8 in einer weiteren perspektivischen Ansicht;
Figur 10 das Messer gemäß Figur 8 in einer weiteren perspektivischen Ansicht;

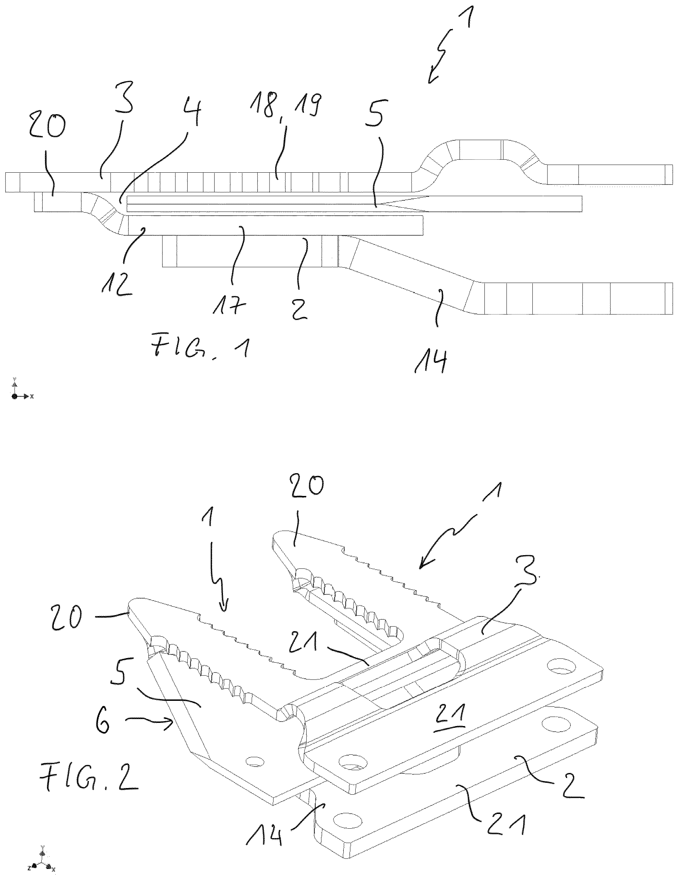

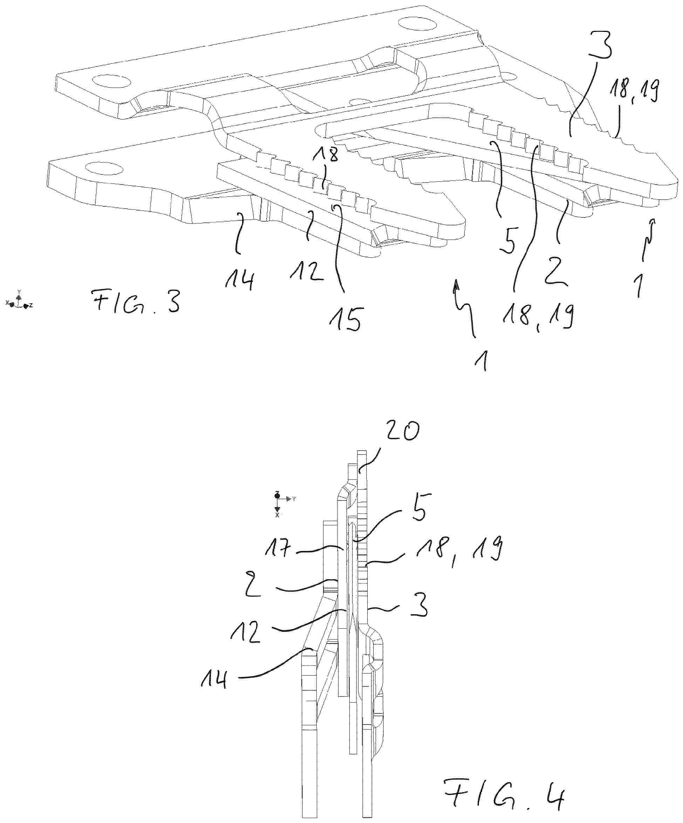

In den Figuren 1 bis 4 ist ein Ausführungsbeispiel einer erfindungsgemäßen Schneidanordnung in einer Seitenansicht und in mehreren perspektivischen Ansichten dargestellt, die nachfolgend gemeinsam beschrieben werden. Die erfindungsgemäße Schneidanordnung für ein land- oder forstwirtschaftliches Schneidwerk umfasst ein Unterteil 2 und ein Oberteil 3, die gemeinsam zumindest einen Finger 1 bilden, der sich entlang einer Längsachse erstreckt. In dem dargestellten Ausführungsbeispiel bilden das Unterteil 2 und das Oberteil 3 zwei Finger 1, wobei die Finger 1 parallel zueinander angeordnet und über mindestens einen Steg 21 an dem Unterteil 2 und/oder an dem Oberteil 3 miteinander verbunden sind. Diese Ausführungsform wird auch Doppelfinger genannt. Hier sind zwei Stege 21 an dem Oberteil 3 und ein Steg 21 an dem Unterteil 2 vorgesehen, wie in Figur 2 erkennbar ist. Das Unterteil 2 und das Oberteil 3 sind an Spitzen 20 der Finger 1 miteinander verbunden. Dem Fachmann ist die Anordnung des Fingers 1 mittels Befestigungsmitteln an einem nicht dargestellten Fingerbalken bekannt. Die nicht dargestellten Längsachsen der zwei Finger 1 erstrecken sich in einem kartesischen Koordinatensystem mit drei Raumrichtungen X, Y und Z parallel zueinander in der X-Richtung.

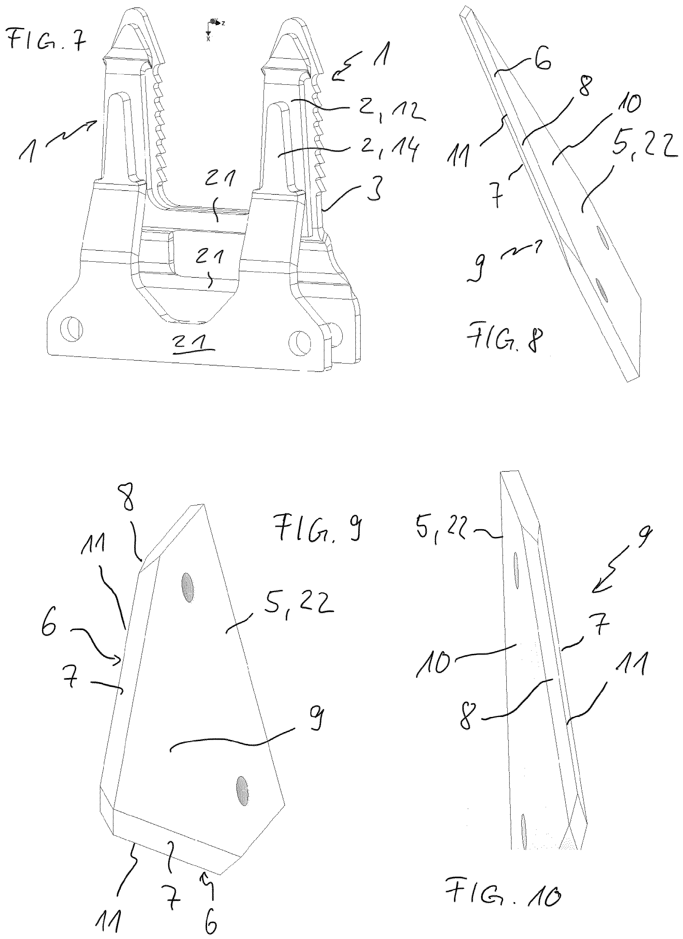

Zwischen dem Unterteil 2 und dem Oberteil 3 ist ein Klingenspalt 4 ausgebildet. In dem Klingenspalt 4 ist ein Messer 5 in einer Antriebsrichtung quer zur Längsachse hin und her gehend geführt. Die Antriebsrichtung des Messers entspricht insbesondere der Z-Richtung. Das Unterteil 2 und das Oberteil 3 sind in der Y-Richtung beabstandet angeordnet. Die Y-Richtung entspricht einer Dickenrichtung Y des Messers 5. Das Messer 5 weist zumindest eine Schneide 6 auf, welche nachfolgend mit Bezug auf die Figuren 8 bis 10 näher beschrieben wird.

In den Figuren 8 bis 10 ist das Messer 5 des Ausführungsbeispiels gemäß Figur 1 einzeln in mehreren perspektivischen Ansichten dargestellt, die nachfolgend gemeinsam beschrieben werden. Erfindungsgemäß weist die Schneide 6 eine dem Unterteil 2 zugewandte untere Schneidfase 7 und eine dem Oberteil 3 zugewandte obere Schneidfase 8 auf. Die Schneide 11 arbeitet nicht mit einer Gegenschneide an dem Klingenspalt 4 zusammen. Die Schneide 11 vollführt also keinen Scherenschnitt im Zusammenspiel mit dem Finger 1. Der Finger 1 dient stattdessen als Gegenhalter und das Messer durchtrennt das Schnittgut in der Art eines Keilschnitts oder Axtschnitts mittels der Schneide 11. Dadurch kann Schnittgut höherer Stärke und Festigkeit durchtrennt werden, beispielsweise Äste.

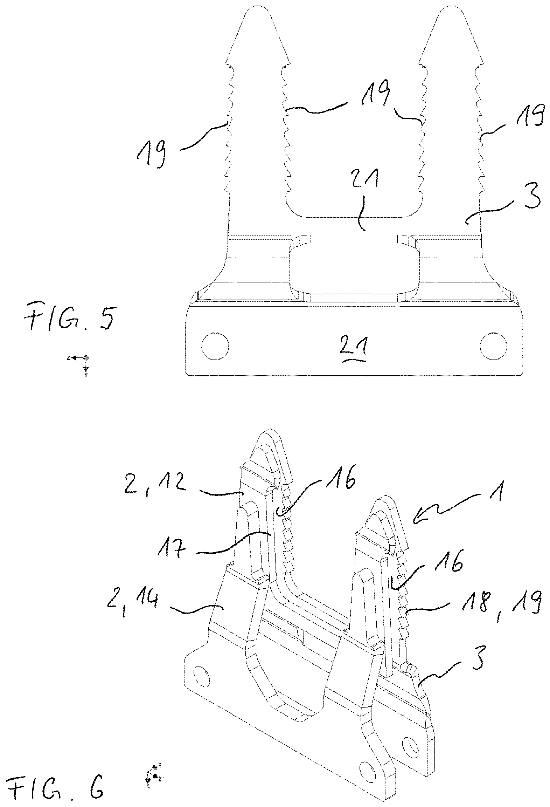

Das Messer 5 besteht vorzugsweise aus mehreren Messerklingen 22, die jeweils die mindestens eine Schneide 6 aufweisen, wobei hier jeweils nur eine Messerklinge 22 dargestellt ist. Dem Fachmann ist die Anordnung mehrerer Messerklingen 22 mittels Befestigungsmitteln an einem nicht dargestellten Messerbalken bekannt, um das Messer 5 zu bilden. Die Messerklinge 22 weist vorzugsweise zwei voneinander abgewandte Schneiden 6 auf. Die untere Schneidfase 7 und der oberen Schneidfase 8 stoßen vorzugsweise an einer Schneidkante 11 aneinander und schließen bevorzugt einen spitzen Schneidenwinkel ein. In der gezeigten Ausführungsform weist das Messer 5 eine dem Unterteil 2 zugewandte untere Anlagefläche 9 auf, zu der die untere Schneidfase 7 winklig verlaufend angeordnet ist. Eine dem Oberteil 3 zugewandte obere Anlagefläche 10 des Messers 5 ist zu der die obere Schneidfase 8 winklig verlaufend angeordnet. Die untere Anlagefläche 9 und die obere Anlagefläche 10 sind vorzugsweise parallel zueinander angeordnet. Die Schneidkante 6 ist in der Dickenrichtung Y des Messers 5 zwischen der unteren Anlagefläche 9 und der oberen Anlagefläche 10 angeordnet. Die untere Anlagefläche 9 und die obere Anlagefläche 10 wirken mit dem Klingenspalt 4 zusammen, was nachfolgend mit Bezug auf die Figuren 5 bis 7 näher erläutert wird.

In den Figuren 5 bis 7 sind das Unterteil 2 und das Oberteil 3 des Ausführungsbeispiels gemäß Figur 1 ohne das Messer in einer Seitenansicht und in mehreren perspektivischen Ansichten dargestellt, die nachfolgend gemeinsam beschrieben werden. Bei der dargestellten Ausführungsform ist vorgesehen, dass das Unterteil 2 zweiteilig ausgeführt ist, wobei ein Führungsteil 12 und ein Träger 14 gemeinsam das Unterteil 2 bilden. Das Führungsteil 12 ist dabei abschnittsweise zwischen dem Träger 14 und dem Oberteil 3 angeordnet ist. Der Träger 14 und das Führungsteil 12 sind insbesondere fest miteinander verbunden. Das Führungsteil 12 weist eine untere Führungsfläche 15 auf, die den Klingenspalt 4 gemeinsam mit einer oberen Führungsfläche 16 an dem Oberteil 3 begrenzt. Die untere Führungsfläche 15 und die obere Führungsfläche 16 sind dabei parallel zueinander angeordnet. Das Führungsteil 12 weist zumindest eine untere Gegenkante 17 und das Oberteil 3 zumindest eine obere Gegenkante 18 auf, an denen die Schneide 6 bei der Hin- und Herbewegung des Messers 5 vorbeigeführt wird. In dem Ausführungsbeispiel weist Das Führungsteil 12 vier untere Gegenkanten 17 auf, nämlich zwei je Finger 1. Das Oberteil 3 weist dementsprechend vier obere Gegenkanten 18 auf. Die oberen Gegenkanten 18 weisen eine Zahnung 19 auf, während die unteren Gegenkanten 17 geradlinig ausgebildet sind. Die Zahnung 19 hält das Schnittgut während des Schneidens vorteilhaft fest. Bei der Verwendung des Schneidwerks ist vorgesehen, dass das Unterteil 2 dem nach dem Schnitt an der Pflanze verbleibenden Teil des Schneidguts zugewandt ist. Der abzuschneidende Teil des Schneidguts befindet sich beim Schnitt auf der Seite des Oberteils 3. So erfolgt ein Aufspleißen des Schnittguts durch die Zahnungen 19 nur an den Abschnitten, bei denen keine besonderen Anforderungen an den Schnitt gestellt werden. Der an der Pflanze verbleibende Teil des Schnittguts hingegen erhält vorteilhaft durch die geradlinig ausgebildeten Gegenkanten 17 einen sauberen Schnitt, wodurch ein Nachwachsen und/oder ein Eindringen von Pilzen verhindert wird.

### Bezugszeichenliste

- 1: Finger
- 2: Unterteil
- 3: Oberteil
- 4: Klingenspalt
- 5: Messer
- 6: Schneide
- 7: Untere Schneidfase
- 8: Obere Schneidfase
- 9: Untere Anlagefläche
- 10: Obere Anlagefläche
- 11: Schneidkante
- 12: Führungsteil
- 14: Träger
- 15: Untere Führungsfläche
- 16: Obere Führungsfläche
- 17: Untere Gegenkante
- 18: Obere Gegenkante
- 19: Zahnung
- 20: Spitze
- 21: Steg
- 22: Messerklinge

- X: X-Richtung, Längsrichtung
- Y: Y-Richtung, Dickenrichtung des Messers
- Z: Z-Richtung, Querrichtung

## Patentansprüche

1. Schneidanordnung für ein land- oder forstwirtschaftliches Schneidwerk umfassend:
ein Unterteil (2) und ein Oberteil (3), die gemeinsam zumindest einen Finger bilden,
der sich entlang einer Längsachse erstreckt, wobei zwischen dem Unterteil und dem Oberteil ein Klingenspalt ausgebildet ist, und
ein Messer (5), das in dem Klingenspalt in einer Antriebsrichtung quer zur Längsachse hin und her gehend geführt ist und das zumindest eine Schneide aufweist, wobei die Schneide eine dem Unterteil zugewandte untere Schneidfase und eine dem Oberteil zugewandte obere Schneidfase aufweist,
wobei das Unterteil zweiteilig ausgeführt ist, wobei ein Führungsteil und ein Träger (14) gemeinsam das Unterteil bilden und wobei das Führungsteil zumindest abschnittsweise zwischen dem Träger und dem Oberteil angeordnet ist,
wobei das Führungsteil (12) zumindest eine untere Gegenkante und das Oberteil zumindest eine obere Gegenkante aufweist, an denen die Schneide bei der Hin- und Her-Bewegung des Messers vorbeigeführt wird,
und wobei die obere Gegenkante gezahnt und die untere Gegenkante geradlinig ausgebildet ist.

2. Schneidanordnung nach Anspruch 1,
**dadurch gekennzeichnet,**
**dass** das Messer (5) eine dem Unterteil zugewandte untere Anlagefläche aufweist,
zu der die untere Schneidfase winklig verlaufend angeordnet ist, und
**dass** das Messer eine dem Oberteil zugewandte obere Anlagefläche aufweist, zu der die obere Schneidfase winklig verlaufend angeordnet ist.

3. Schneidanordnung nach Anspruch 2,
**dadurch gekennzeichnet,**
**dass** die untere Anlagefläche und die obere Anlagefläche parallel zueinander angeordnet sind.

4. Schneidanordnung nach einem der Ansprüche 1 bis 3,
**dadurch gekennzeichnet,**
**dass** die untere Schneidfase und die obere Schneidfase an einer Schneidkante (11) aneinanderstoßen und einen spitzen Schneidenwinkel einschließen.

5. Schneidanordnung nach Anspruch 4,
**dadurch gekennzeichnet,**
**dass** die Schneidkante (11) in einer Dickenrichtung des Messers zwischen der unteren Anlagefläche und der oberen Anlagefläche angeordnet ist.

6. Schneidanordnung nach Anspruch 1,
**dadurch gekennzeichnet,**
**dass** das Führungsteil eine untere Führungsfläche aufweist, die den Messerspalt begrenzt und dass das Oberteil (3) eine obere Führungsfläche aufweist, die den Klingenspalt begrenzt, wobei die untere Führungsfläche und die obere Führungsfläche parallel zueinander angeordnet sind.

7. Schneidanordnung nach einem der Ansprüche 1 bis 6,
**dadurch gekennzeichnet,**
**dass** das Führungsteil (12) beidseitig der Längsachse untere Gegenkanten und das Oberteil beidseitig der Längsachse obere Gegenkanten aufweist.

8. Schneidanordnung nach einem der Ansprüche 1 bis 7,
**dadurch gekennzeichnet,**
**dass** das Unterteil (2) und das Oberteil (3) an einer Spitze miteinander verbunden sind.

9. Schneidanordnung nach einem der Ansprüche 1 bis 8,
**dadurch gekennzeichnet,**
**dass** das Unterteil (2) und das Oberteil (3) zwei oder mehr Finger bilden, wobei die Finger parallel zueinander angeordnet und über mindestens einen Steg am Unterteil und/oder am Oberteil miteinander verbunden sind.

10. Schneidanordnung nach einem der Ansprüche 1 bis 9,
**dadurch gekennzeichnet,**
**dass** das Messer (5) Messerklingen aufweist, die die mindestens eine Schneide aufweisen.

11. Schneidanordnung nach Anspruch 10,
**dadurch gekennzeichnet,**
**dass** die Messerklingen (22) zwei voneinander abgewandte Schneiden aufweist.

12. Verwendung einer Schneidanordnung nach Anspruch 1 zum Schneiden von Ästen.

13. Verwendung nach Anspruch 12,
**dadurch gekennzeichnet,**
**dass** das Unterteil (2) dem nach dem Schnitt an der Pflanze verbleibenden Teil der Äste zugewandt ist.

## Claims

1. Cutting assembly for an agricultural or forestry cutter, the cutting assembly comprising:
a lower member (2) and an upper member (3), which together form at least one finger guard extending along a longitudinal axis, wherein a blade gap is formed between the lower member and the upper member, and
a knife (5), which is guided in a reciprocating manner in the blade gap in a drive direction transverse to the longitudinal axis, and which has at least one cutting edge, wherein the cutting edge has a lower cutting bevel facing the lower member and an upper cutting bevel facing the upper member,
wherein the lower member is designed in two parts, wherein a guide member and a support (14) together form the lower member, and wherein the guide member is arranged at least in sections between the support and the upper member,
wherein the guide member (12) has at least one lower abutment edge and the upper member has at least one upper abutment edge, past which the cutting edge is driven during the reciprocating movement of the knife, and wherein the upper abutment edge is serrated and the lower abutment edge is formed straight.

2. Cutting assembly according to claim 1,
**characterized in**
**that** the knife (5) has a lower contact surface facing the lower member, to which the lower cutting bevel extends inclined, and in that the knife has an upper contact surface facing the upper member, to which the upper cutting bevel extends inclined.

3. Cutting assembly according to claim 2,
**characterized in**
**that** the lower contact surface and the upper contact surface are arranged parallel to each other.

4. Cutting assembly according to any one of claims 1 to 3,
**characterized in**
**that** the lower cutting bevel and the upper cutting bevel contact each other along a cutting edge line (11) and enclose an acute cutting edge angle.

5. Cutting assembly according to claim 4,
**characterized in**
**that** in a thickness direction of the knife the cutting edge line (11) is arranged between the lower contact surface and the upper contact surface.

6. Cutting assembly according to claim 1,
**characterized in**
**that** the guide member has a lower guide surface which delimits the blade gap and that the upper member (3) has an upper guide surface which delimits the blade gap, wherein the lower guide surface and the upper guide surface are arranged parallel to one another.

7. Cutting assembly according to any one of claims 1 to 6,
**characterized in**
**that** the guide member (12) has lower abutment edges on both sides of the longitudinal axis and the upper member has upper abutment edges on both sides of the longitudinal axis.

8. Cutting assembly according to one of the claims 1 to 7,
**characterized in**
**that** the lower member (2) and the upper member (3) are connected to each other at a tip.

9. Cutting assembly according to one of the claims 1 to 8,
**characterized in**
**that** the lower member (2) and the upper member (3) form two or more finger guards, wherein the finger guards are arranged parallel to each other and are connected to each other via at least one web on the lower member and/or on the upper member.

10. Cutting assembly according to one of the claims 1 to 9,
**characterized in**
**that** the knife (5) comprises knife blades (22), which comprises the at least one cutting edge.

11. Cutting assembly according to claim 10,
**characterized in**
**that** the knife blades (22) comprise two cutting edges facing away from each other.

12. Use of a cutting assembly according to claim 1 for cutting branches.

13. Use according to claim 12,
**characterized in**
**that** the lower member (2) faces the part of the branches remaining on the plant after cutting.

## Revendications

1. Dispositif de coupe pour un mécanisme de coupe agricole ou forestier comprenant :
une partie inférieure (2) et une partie supérieure (3), qui forment en commun au moins un doigt, qui s'étend le long d'un axe longitudinal, sachant qu'un interstice pour lame est constitué entre la partie inférieure et la partie supérieure et
un couteau (5),
qui est guidé dans une direction d'entraînement en mouvement de va-et-vient dans l'interstice pour lame transversalement à l'axe longitudinal et qui comporte au moins un tranchant, sachant que le tranchant comporte un chanfrein de coupe inférieur tourné vers la partie inférieure et un chanfrein de coupe supérieur tourné vers la partie supérieure,
sachant que la partie inférieure est exécutée en deux parties, sachant qu'une partie de guidage et un support (14) forment en commun la partie inférieure et sachant que la partie de guidage est disposée au moins par segments entre le support et la partie supérieure,
sachant que la partie de guidage (12) comporte au moins une contre-arête inférieure et la partie supérieure comporte au moins une contre-arête supérieure sur lesquelles le tranchant est passé lors du mouvement de va-et-vient du couteau,
et sachant que la contre-arête supérieure est dentée et la contre-arête inférieure est rectiligne.

2. Dispositif de coupe selon la revendication 1,
**caractérisé en ce que**
le couteau (5) comporte une surface d'appui inférieure tournée vers la partie inférieure en direction de laquelle est disposé le chanfrein de coupe inférieur en formant un angle et **en ce que** le couteau comporte une surface d'appui supérieure tournée vers la partie supérieure en direction de la quelle est disposé le chanfrein de coupe supérieur en formant un angle.

3. Dispositif de coupe selon la revendication 2,
**caractérisé en ce que**
la surface d'appui inférieure et la surface d'appui supérieure sont disposées parallèlement l'une par rapport à l'autre.

4. Dispositif de coupe selon l'une quelconque des revendications 1 à 3,
**caractérisé en ce que**
le chanfrein de coupe inférieur et le chanfrein de coupe supérieur viennent en butée l'un contre l'autre sur une arête tranchante (11) et forment un angle de coupe aigu.

5. Dispositif de coupe selon la revendication 4,
**caractérisé en ce que**
l'arête tranchante (11) est disposée dans une direction d'épaisseur du couteau entre la surface d'appui inférieure et la surface d'appui supérieure.

6. Dispositif de coupe selon la revendication 1
**caractérisé en ce que**
la partie de guidage comporte une surface de guidage inférieure qui délimite l'interstice pour lame et **en ce que** la partie supérieure (3) comporte une surface de guidage supérieure, qui délimite l'interstice pour lame, sachant que la surface de guidage inférieure et la surface de guidage supérieure sont disposées parallèlement l'une par rapport à l'autre.

7. Dispositif de coupe selon l'une quelconque des revendications 1 à 6,
**caractérisé en ce que**
la partie de guidage (12) comporte des contre-arêtes inférieures des deux côtés de l'axe longitudinal et la partie supérieure comporte des contre-arêtes supérieures des deux côtés de l'axe longitudinal.

8. Dispositif de coupe selon l'une quelconque des revendications 1 à 7,
**caractérisé en ce que**
la partie inférieure (2) et la partie supérieure (3) sont reliées entre elles à une extrémité pointue.

9. Dispositif de coupe selon l'une quelconque des revendications 1 à 8,
**caractérisé en ce que**
la partie inférieure (2) et la partie supérieure (3) forment deux doigts ou plus, sachant que les doigts sont disposés parallèlement les uns par rapport aux autres et sont reliés entre eux sur la partie inférieure et/ou la partie supérieure par le biais d'au moins une barrette de montage.

10. Dispositif de coupe selon l'une quelconque des revendications 1 à 9,
**caractérisé en ce que**
le couteau (5) comporte des lames de couteau, qui comportent au moins un tranchant.

11. Dispositif de coupe selon la revendication 10,
**caractérisé en ce que**
les lames de couteau (22) comportent deux tranchants opposés l'un à l'autre.

12. Utilisation d'un dispositif de coupe selon la revendication 1 pour la coupe de branches.

13. Utilisation selon la revendication 12,
**caractérisée en ce que**
la partie inférieure (2) est tournée vers la partie des branches restant sur la plante après la coupe.
